# EUROPÄISCHE PATENTSCHRIFT

(11) **EP 1 631 641 B1**
(45) Veröffentlichungstag und Bekanntmachung des Hinweises auf die Patenterteilung: **21.03.2007**
(21) Anmeldenummer: 04733539.3
(22) Anmeldetag: 18.05.2004
(51) Int. Cl.: C09J 123/10, C09J 123/04, C09J 123/30

(54) **SCHMELZKLEBEMASSEN**
HOT-MELT ADHESIVE MATERIALS
PATES ADHESIVES FUSIBLES

(30) Priorität: 26.05.2003 DE 10323617
(43) Veröffentlichungstag der Anmeldung: 08.03.2006
(73) Patentinhaber: Clariant Produkte (Deutschland) GmbH, 65929 Frankfurt am Main (DE)
(72) Erfinder: BACH, Sebastijan, 86462 Langweid (DE); HERRMANN, Hans-Friedrich, 64521 Gross-Gerau (DE); HOHNER, Gerd, 86368 Gersthofen (DE)
(86) Internationale Anmeldenummer: PCT/EP2004/005322
(87) Internationale Veröffentlichungsnummer: WO 2004/104128

(56) Entgegenhaltungen:
- US-A- 5 081 322
- US-A- 5 998 547
- US-A1- 2004 052 952
- US-B1- 6 211 303

## Beschreibung

Die Erfindung bezieht sich auf Schmelzklebemassen, enthaltend Polyolefinwachse, die mit Hilfe von Metallocenkatalysatoren hergestellt wurden.

Schmelzkleber sind lösemittelfreie Klebstoffe, die auf die zu verklebenden Substrate in heißem, schmelzflüssigem Zustand aufgetragen werden und die nach dem Erstarren ihre Klebewirkung entfalten. Sie werden aufgrund ihrer vielseitigen Vorteile in zunehmendem Umfang u.a. in der Verpackungs-, Möbel-, Textil- und Schuhindustrie als wirtschaftliche und umweltfreundliche Alternative zu herkömmlichen, lösemittelbasierenden Klebstoffen eingesetzt. Bestandteile üblicher Schmelzkleber-Rezepturen sind polare oder unpolare Polymere - in der Regel Ethylen-Vinylacetat-Copolymere - Harze sowie Wachse.

Die polaren oder unpolaren Polymeren dienen als Gerüstsubstanz; sie sorgen für den kohäsiven Zusammenhalt der Klebemasse und tragen gleichzeitig zur Adhäsion zum Substrat bei. Der Harzzusatz verbessert die Adhäsionswirkung und kann auf die verschiedenen Kleberkomponenten gegebenenfalls einen verträglichkeitsvermittelnden Effekt ausüben. Wachse werden zur Modifizierung eingesetzt, können aber bei entsprechender Eignung auch als Gerüstsubstanz dienen. Sie regulieren wichtige physikalische Eigenschaften der Klebemassen wie etwa Härte, Schmelzviskosität und Erweichungspunkt und beeinflussen in ihrer Wirkung auf offene Zeit, Adhäsion, Kohäsion etc. entscheidend das anwendungstechnische Verhalten.

Als Wachse werden bisher makro- und mikrokristalline Paraffinwachse, Fischer-Tropsch-Wachse sowie Polyolefinwachse eingesetzt.

Polyolefinwachse können durch thermischen Abbau verzweigter hochpolymerer Polyolefin-Kunststoffe oder durch direkte Polymerisation von Olefinen hergestellt werden. Als Polymerisationsverfahren kommen beispielsweise Hochdrucktechnologien in Frage, wobei die Olefine, in der Regel Ethylen, bei hohen Drucken und Temperaturen radikalisch zu verzweigten Wachsen umgesetzt werden, daneben Niederdruck- bzw. Zieglerverfahren, bei denen Ethylen und/oder höhere 1-Olefine mit Hilfe metallorganischer Katalysatoren bei vergleichsweise geringen Drucken und Temperaturen polymerisiert werden.

Als Variante des Niederdruckverfahrens ist in neuerer Zeit eine Arbeitsweise bekanntgeworden, bei der als metallorganische Katalysatoren Metallocenverbindungen Verwendung finden. Letztere enthalten Titan-, Zirkonium-oder Hafniumatome als aktive Spezies und werden in der Regel in Kombination mit Cokatalysatoren, z.B. Organoaluminium- oder Borverbindungen, bevorzugt Aluminoxanverbindungen, eingesetzt. Die Polymerisation erfolgt bei Bedarf in Gegenwart von Wasserstoff als Molmassenregler. Metallocenverfahren zeichnen sich dadurch aus, dass im Vergleich zur älteren Zieglertechnologie Wachse mit engerer Molmassenverteilung, gleichmäßigerem Comonomereinbau, niedrigeren Schmelzpunkten und höheren Katalysatorausbeuten erhalten werden können.

Überraschend wurde nun gefunden, dass sich mit Hilfe von Metallocenkatalysatoren hergestellte Polyolefinwachse in besonders vorteilhafter Weise als Rezepturkomponente für Schmelzkleber eignen. Insbesondere ergab sich, dass Metallocenwachse enthaltende Schmelzkleber überragende Eigenschaften in Bezug auf die Klebekraft (Adhäsion zum Substrat) und die Kälteflexibilität aufweisen.

Gegenstand der Anmeldung sind daher Schmelzklebemassen, enthaltend Polyolefinwachse, wobei die Polyolefinwachse mit Hilfe von Metallocenkatalysatoren hergestellt wurden, in unveränderter Form eingesetzt werden und einen Tropf-oder Erweichungspunkt Ring/Kugel zwischen 80 und 165 °C und eine Schmelzviskosität, gemessen bei einer Temperatur von 10 K oberhalb des Tropf- oder Erweichungspunktes, von maximal 40 000 mPa·s aufweisen, und mindestens einen weiteren Bestandteil ausgewählt aus der Gruppe Ethylen-Vinylacetat-Copolymere, ataktische Poly-α-Olefine, Polyisobutylen, Styrol-Butadien-Styrol-Blockpolymere, Styrol-Isopren-Styrol-Blockpolymere, Polyamide, Polyester, Kolophoniumharze und deren Derivate oder Kohlenwasserstoffharze oder eine Kombination von diesen.

Bevorzugt weisen die Polyolefinwachse einen Tropf- oder Erweichungspunkt Ring/Kugel zwischen 90 und 160 °C und eine Schmelzviskosität, gemessen bei einer Temperatur 10 K oberhalb des Tropf- oder Erweichungspunktes, von maximal 30 000 mPa·s auf.

Hierbei wurden die Schmelzviskositäten nach DIN 53019 mit einem Rotationsviskosimeter, die Tropfpunkte nach DIN 51801/2, die Erweichungspunkte/Ring Kugel nach DIN EN 1427 bestimmt.

Die Schmelzviskosität nach DIN 53019 wird wie folgt bestimmt:
Die zu untersuchende Flüssigkeit befindet sich in einem Ringspalt zwischen zwei koaxialen Zylindern, von denen der eine mit konstanter Drehzahl rotiert (Rotor), der andere ruht (Stator). Ermittelt werden die Drehzahl und das Drehmoment, das nötig ist, um den Reibungswiderstand der Flüssigkeit im Ringspalt zu überwinden. Aus den geometrischen Abmessungen des Systems sowie den ermittelten Drehmoment- und Drehzahlwerten lassen sich die in der Flüssigkeit herrschende Schubspannung und das Geschwindigkeitsgefälle berechnen.

Die vorgenannte Norm beschreibt durch Festlegung bestimmter Geometrieverhältnisse ein Standardfließbild zur Messung des Fließverhaltens von newtonschen und nicht-newtonschen Flüssigkeiten in Rotationsviskosimetem mit koaxialen Zylindern.

Der Tropfpunkt charakterisiert die Schmelzbarkalt von festen Fetten, Schmierstoffen, Bitumina, usw. Als Tropfpunkt gilt der Temperaturpunkt, bei dem die auf die Quecksilberkugel eines Thermometers - bzw. auf daran befestigte Nippel von Tropfpunkt-Bestimmungsgeräten (z.B. nach Ubbelohde) - aufgebrachte Prüfmasse unter ihrem Eigengewicht abtropft.

Nach DIN 51801/2 wird die mit einem Impfpunktgerät nach Ubbelohde folgendermaßen ausgeführt:

Auf den unteren Teil eines Thermometers ist eine zylindrische Hülse aus Metall gekittet, auf die eine zweite Metallhülse aufgeschraubt werden kann. Diese zweite Metallhülse hat seitlich eine kleine Öffnung zum Druckausgleich und im unteren Teil drei Sperrstifte, die vom unteren Rand der Hülse 7,5 mm entfernt sind. In die Hülse passt ein zylindrischer, nach unten sich verjüngender Nippel aus einer Kupfer-Zink-Legierung (Messing) mit einem Kupfergehalt zwischen 58 und 63 Gew.-%.
Der obere Teil der Metallhülse muss so auf das Thermometer gekittet sein, dass bei fest aufgeschraubtem Unterteil der Unterrand des Thermometergefäßes mit dem Unterrand der Metallhülse abschneidet. Die Sperrstifte in der Metallhülse gestatten, den Nippel so in die Hülse einzuführen, dass das Thermometergefäß überall gleich weit von den Wandungen des Nippels entfernt ist.
Die vorbereitete Probe wird in gießbarem Zustand in den auf der Platte stehenden Nippel so eingefüllt, dass ein Überschuss entsteht.
Der Nippel wird bei einer Temperatur, die ein Aufschieben eben noch ermöglicht, vorsichtig so auf die Halterung am Thermometer geschoben, dass das Thermometergefäß die Nippelwand nicht berührt.
Das Thermometer mit dem Nippel wird durch einen in der Mitte durchbohrten und an einer Seite eingekerbten Stopfen in der Mitte des Reagenzglases befestigt. Der Abstand zwischen Unterkante Nippel und Reagenzglas-Boden soll 25 mm betragen. Das Reagenzglas wird bis zu zwei Drittel seiner Länge lotrecht in den Becher gehängt. Der Becher enthält Eiswasser als Badflüssigkeit. Dann wird das Tropfpunktgerät so erwärmt, dass von etwa 10°C unter dem erwarteten Tropfpunkt an die Temperatur gleichmäßig um 1 °C je Minute steigt.
Bei zunehmender Temperatur erweicht die Probe allmählich. Man beobachtet, bei welcher Temperatur das aus dem Nippel ausfließende Bindemittel den Boden des Reagenzglases erreicht hat.

Der Erweichungspunkt Ring/Kugel nach DIN EN 1427 wird folgendermaßen bestimmt:
Zwei in geschulterte Ringe aus Kupfer-Zink-Legierung gegossene Bitumenschichten werden mit kontrollierter Temperaturänderung in einem Flüssigkeitsbad erwärmt. Jede Schicht trägt eine Stahlkugel. Der Erweichungspunkt wird als arithmetischer Mittelwert der Temperaturen angegeben, bei denen die beiden Bitumenschichten soweit erweicht sind, dass die vom Bitumen eingeschlossenen Kugeln die Messstrecke von (25,0 ± 0,4) mm zurückgelegt haben.
Der Erweichungspunkt ist somit die Temperatur, bei der das Material unter Norm-Prüfbedingungen eine bestimmte Konsistenz erreicht.
Bevorzugt weisen die Polyolefinwachse eine gewichtsmittlere Molmasse M_{w} zwischen 1000 und 30 000 g/mol und eine zahlenmittlere Molmasse Mₙ zwischen 500 und 20 000 g/mol auf.

Das Molmassengewichtsmittel M_{w}, das Molmassenzahlenmittel Mₙ und der resultierende Quotient M_{w}/Mₙ wurden durch Gelpermeationschromatographie bei 135 °C in 1,2-Dichlorbenzol ermittelt.

Bevorzugt enthalten die Schmelzklebemassen als Polyolefinwachse Copolymerwachse aus Propylen und 0,1 bis 30 Gew.-% Ethylen und/oder 0,1 bis 50 Gew.-% mindestens eines verzweigten oder unverzweigten 1-Alkens mit 4 bis 20 C-Atomen und mit einer Schmelzviskosität, gemessen bei einer Temperatur 10 K oberhalb des Tropf- bzw. Erweichungspunktes, zwischen 100 und 30 000 mPa·s.

In einer anderen Ausführungsform enthalten die Schmelzklebemassen als Polyolefinwachse Propylenhomopolymerwachse mit einer Schmelzviskosität, gemessen bei einer Temperatur 10 K oberhalb des Tropf- bzw. Erweichungspunktes, zwischen 100 und 30 000 mPa·s.

In einer weiteren Ausführungsform enthalten die Schmelzklebemassen als Polyolefinwachse Ethylenhomopolymerwachse.

Die Schmelzklebemassen können als Polyolefinwachse auch Copolymerwachse aus Ethylen und 0,1 bis 30 Gew.-% mindestens eines verzweigten oder unverzweigten 1-Alkens mit 3 bis 20 C-Atomen enthalten.

Die Schmelzklebemassen können zusätzlich Füllstoffe oder Hilfsstoffe wie Weichmacher, Pigmente und Antioxidantien enthalten.
Als Polyolefinwachse kommen Homopolymerisate des Ethylens oder höherer 1-Olefine oder deren Copolymerisate untereinander in Frage. Als 1-Olefine werden lineare oder verzweigte Olefine mit 3 bis 18 C-Atomen, vorzugsweise 3 bis 6 C-Atomen, eingesetzt. Diese Olefine können eine mit der olefinischen Doppelbindung in Konjugation stehende aromatische Substitution aufweisen. Beispiele hierfür sind Propen, 1-Buten, 1-Hexen, 1-Octen oder 1-Octadecen sowie Styrol. Bevorzugt sind Homopolymerisate des Ethylens oder Propens oder deren Copolymerisate untereinander. Die Copolymeren bestehen zu 70 bis 99,9, bevorzugt zu 80 bis 99 Gew.-% aus einer Olefinart.

Geeignet sind Olefin-Homo- und Copolymerwachse mit einer gewichtsmittleren Molmasse M_{w} zwischen 1000 und 30 000 g/mol, bevorzugt zwischen 2000 und 20 000 g/mol, einer zahlenmittleren Molmasse Mₙ zwischen 500 und 20 000 g/mol, bevorzugt zwischen 1000 und 10 000 g/mol, einem Tropf- bzw. Erweichungspunkt Ring/Kugel zwischen 90 und 165 °C, bevorzugt zwischen 100 und 160 °C und einer Schmelzviskosität, gemessen bei einer Temperatur 10 K oberhalb des Tropf- bzw. Erweichungspunktes, von maximal 40 000 mPa·s, bevorzugt zwischen 100 und 20 000 mPa·s.

Für die Herstellung der erfindungsgemäß verwendeten Polyolefinwachse werden Metallocenverbindungen der Formel I eingesetzt.

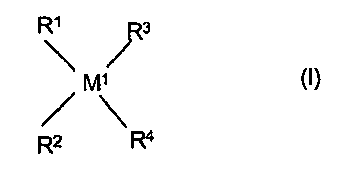

Diese Formel umfasst auch Verbindungen der Formel Ia, 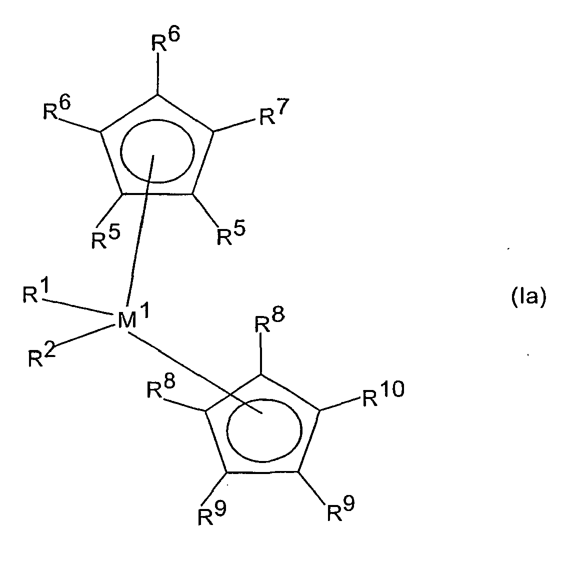 der Formel Ib 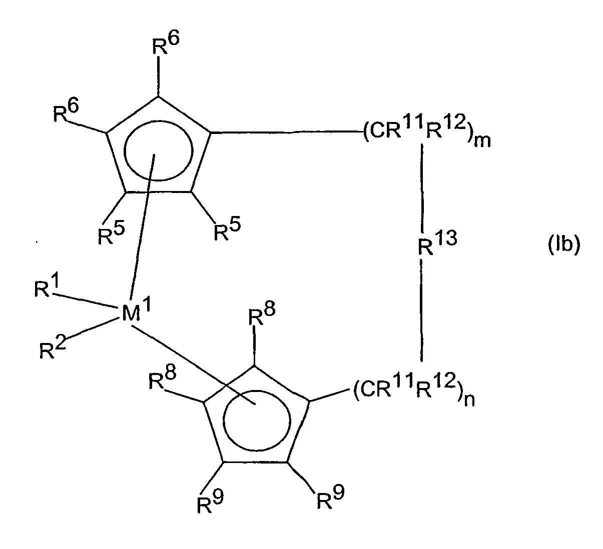 und der Formel Ic

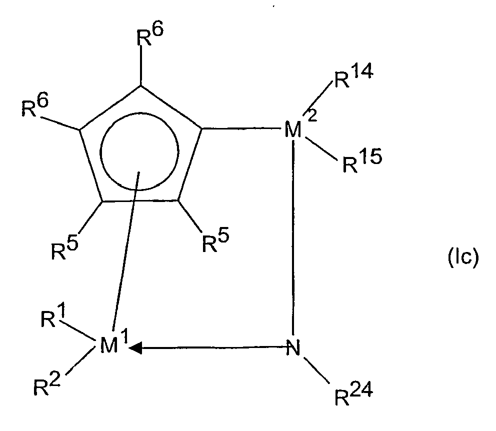

In den Formeln I, Ia und Ib ist M¹ ein Metall der Gruppe IVb, Vb oder Vlb des Periodensystems, beispielsweise Titan, Zirkonium, Hafnium, Vanadium, Niob, Tantal, Chrom, Molybdän, Wolfram, vorzugsweise Titan, Zirkonium, Hafnium.

R¹ und R² sind gleich oder verschieden und bedeuten ein Wasserstoffatom, eine C₁-C₁₀, vorzugsweise C₁-C₃-Alkylgruppe, insbesondere Methyl, eine C₁-C₁₀-, vorzugsweise C₁-C₃-Alkoxygruppe, eine C₆-C₁₀, vorzugsweise C₆-C₈-Arylgruppe, eine C₆-C₁₀-, vorzugsweise C₆-C₈-Aryloxygruppe, eine C₂-C₁₀, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogen-, vorzugsweise Chloratom.

R³ und R⁴ sind gleich oder verschieden und bedeuten einen ein- oder mehrkernigen Kohlenwasserstoffrest, welcher mit dem Zentralatom M¹ eine Sandwichstruktur bilden kann. Bevorzugt sind R³ und R⁴ Cyclopentadienyl, Indenyl, Tetrahydroindenyl, Benzoindenyl oder Fluorenyl, wobei die Grundkörper noch zusätzliche Substituenten tragen oder miteinander verbrückt sein können. Außerdem kann einer der Reste R³ und R⁴ ein substituiertes Stickstoffatom sein, wobei R²⁴ die Bedeutung von R¹⁷ hat und vorzugsweise Methyl, tert.-Butyl oder Cyclohexyl ist.

R⁵, R⁶, R⁷, R⁸, R⁹ und R¹⁰ sind gleich oder verschieden und bedeuten ein Wasserstoffatom, ein Halogenatom, vorzugsweise ein Fluor-, Chlor- oder Bromatom, eine C₁-C₁₀-, vorzugsweise C₁-C₄-Alkylgruppe, eine C₆-C₁₀-, vorzugsweise C₆-C₈-Arylgruppe, eine C₁-C₁₀-, vorzugsweise C₁-C₃-Alkoxygruppe, einen -NR¹⁶₂-, -SR¹⁶-, -OSiR¹⁶₃-, -SiR¹⁶₃- oder -PR¹⁶₂-Rest, worin R¹⁶ eine C₁-C₁₀-, vorzugsweise C₁-C₃-Alkylgruppe oder C₆-C₁₀-, vorzugsweise C₆-C₈-Arylgruppe oder im Falle Si oder P enthaltender Reste auch ein Halogenatom, vorzugsweise Chloratom ist oder je zwei benachbarte Reste R⁵, R⁶, R⁷, R⁸, R⁹ oder R¹⁰ bilden mit den sie verbindenden C-Atomen einen Ring. Besonders bevorzugte Liganden sind die substituierten Verbindungen der Grundkörper Cyclopentadienyl, Indenyl, Tetrahydroindenyl, Benzoindenyl oder Fluorenyl.

R¹³ ist 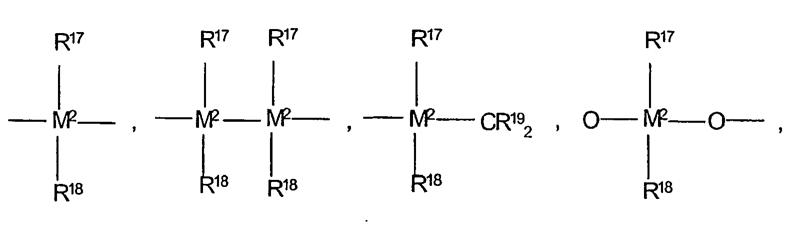 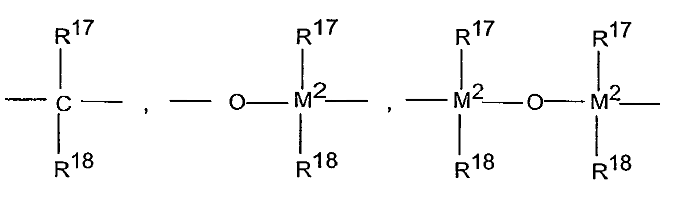 =BR¹⁷, =AIR¹⁷, -Ge-, -Sn-, -O-, -S-, =SO, =SO₂, =NR¹⁷, =CO, =PR¹⁷ oder =p(O)R¹⁷, wobei R¹⁷, R¹⁸ und R¹⁹ gleich oder verschieden sind und ein Wasserstoffatom, ein Halogenatom, vorzugsweise ein Fluor-, Chlor- oder Bromatom, eine C₁-C₃₀-, vorzugsweise C₁-C₄-Alkyl-, insbesondere Methylgruppe, eine C₁-C₁₀-Fluoralkyl-, vorzugsweise CF₃-Gruppe, eine C₆-C₁₀-Fluoraryl-, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxy-, insbesondere Methoxygruppe, eine C₂-C₁₀, vorzugsweise C₂-C₄-Alkenylgruppe, eine C₇-C₄₀-, vorzugsweise C₇-C₁₀-Aralkylgruppe, eine C₈-C₄₀-, vorzugsweise C₈-C₁₂-Arylalkenylgruppe oder eine C₇-C₄₀, vorzugsweise C₇-C₁₂-Alkylarylgruppe bedeuten, oder R¹⁷ und R¹⁸ oder R¹⁷ und R¹⁹ bilden jeweils zusammen mit den sie verbindenden Atomen einen Ring.

M² ist Silizium, Germanium oder Zinn, bevorzugt Silizium und Germanium. R¹³ ist vorzugsweise =CR¹⁷R¹⁸, =SiR¹⁷R¹⁸, =GeR¹⁷R¹⁸, -O-, -S-, =SO, =PR¹⁷ oder =P(O)R¹⁷.

R¹¹ und R¹² sind gleich oder verschieden und haben die für R¹⁷ genannte Bedeutung. m und n sind gleich oder verschieden und bedeuten null, 1 oder 2, bevorzugt null oder 1, wobei m plus n null, 1 oder 2, bevorzugt null oder 1 ist.

R¹⁴ und R¹⁵ haben die Bedeutung von R¹⁷ und R¹⁸.

Beispiele für geeignete Metallocene sind:
Bis(1,2,3-trimethylcyclopentadienyl)zirkoniumdichlorid,
Bis(1,2,4-trimethylcyclopentadienyl)zirkoniumdichlorid,
Bis(1,2-dimethylcyclopentadienyl)zirkoniumdichlorid,
Bis(1,3-dimethylcyclopentadienyl)zirkoniumdichlorid,
Bis(1-methylindenyl)zirkoniumdichlorid,
Bis(1-n-butyl-3-methyl-cyclopentadienyl)zirkoniumdichlorid,
Bis(2-methyl-4,6-di-i.propyl-indenyl)zirkoniumdichlorid,
Bis(2-methylindenyl)zirkoniumdichlorid,
Bis(4-methylindenyl)zirkoniumdichlorid,
Bis(5-methylindenyl)zirkoniumdichlorid,
Bis(alkylcyclopentadienyl)zirkoniumdichlorid,
Bis(alkylindenyl)zirkoniumdichlorid,
Bis(cyclopentadienyl)zirkoniumdichlorid,
Bis(indenyl)zirkoniumdichlorid,
Bis(methylcyclopentadienyl)zirkoniumdichlorid,
Bis(n-butylcyclopentadienyl)zirkoniumdichlorid,
Bis(octadecylcyclopentadienyl)zirkoniumdichlorid,
Bis(pentamethylcyclopentadienyl)zirkoniumdichlorid,
Bis(trimethylsilylcyclopentadienyl)zirkoniumdichlorid,
Biscyclopentadienylzirkoniumdibenzyl,
Biscyclopentadienylzirkoniumdimethyl,
Bistetrahydroindenylzirkoniumdichlorid,
Dimethylsilyl-9-fluorenylcyclopentadienylzirkoniumdichlorid,
Dimethylsilyl-bis-1-(2,3,5-trimethylcyclopentadienyl)zirkoniumdichlorid,
Dimethylsilyl-bis-1-(2,4-dimethyl-cyclopentadienyl)zirkoniumdichlorid,
Dimethylsilyl-bis-1-(2-methyl-4,5-benzoindenyl)zirkoniumdichlorid,
Dimethylsilyl-bis-1-(2-methyl-4-ethylindenyl)zirkoniumdichlorid,
Dimethylsilyl-bis-1-(2-methyl-4-i-propylindenyl)zirkoniumdichlorid,
Dimethylsilyl-bis-1-(2-methyl-4-phenylindenyl)zirkoniumdichlorid,
Dimethylsilyl-bis-1-(2-methyl-indenyl)zirkoniumdichlorid,
Dimethylsilyl-bis-1-(2-methyltetrahydroindenyl)zirkoniumdichlorid,
Dimethylsilyl-bis-1-indenylzirkoniumdichlorid,
Dimethylsilyl-bis-1-indenylzirkoniumdimethyl,
Dimethylsilyl-bis-1-tetrahydroindenylzirkoniumdichlorid,
Diphenylmethylen-9-fluorenylcyclopentadienylzirkoniumdichlorid,
Diphenylsilyl-bis-1-indenylzirkoniumdichlorid,
Ethylen-bis-1-(2-methyl-4,5-benzoindenyl)zirkoniumdichlorid;
Ethylen-bis-1-(2-methyl-4-phenylindenyl)zirkoniumdichlorid,
Ethylen-bis-1-(2-methyl-tetrahydroindenyl)zirkoniumdichlorid,
Ethylen-bis-1-(4,7-dimethyl-indenyl)zirkoniumdichlorid,
Ethylen-bis-1-indenylzirkoniumdichlorid,
Ethylen-bis-1-tetrahydroindenylzirkoniumdichlorid,
Indenyl-cyclopentadienyl-zirkoniumdichlorid,
Isopropyliden(1-indenyl)(cyclopentadienyl)zirkoniumdichlorid,
Isopropyliden(9-fluorenyl)(cyclopentadienyl)zirkonlumdichlorid,
Phenylmethylsilyl-bis-1-(2-methyl-indenyl)zirkoniumdichlorid,
sowie jeweils die Alkyl- oder Aryl-Derivate dieser Metallocendichloride.

Zur Aktivierung der Einzentren-Katalysatorsysteme werden geeignete Cokatalysatoren eingesetzt. Geeignete Cokatalysatoren für Metallocene der Formel I sind aluminiumorganische Verbindungen, insbesondere Alumoxane oder auch aluminiumfreie Systeme wie R²⁰ₓNH₄₋ₓBR²¹₄, R²⁰ₓPH₄₋ₓBR²¹₄, R²⁰₃CBR²¹₄ oder BR²¹₃. In diesen Formeln bedeutet x eine Zahl von 1 bis 4, die Reste R²⁰ sind gleich oder verschieden, bevorzugt gleich, und bedeuten C₁-C₁₀-Alkyl oder C₆-C₁₈-Aryl oder zwei Reste R²⁰ bilden zusammen mit dem sie verbindenden Atom einen Ring, und die Reste R²¹ sind gleich oder verschieden, bevorzugt gleich, und stehen für C₆-C₁₈-Aryl, das durch Alkyl, Haloalkyl oder Fluor substituiert sein kann. Insbesondere steht R²⁰ für Ethyl, Propyl, Butyl oder Phenyl und R²¹ für Phenyl, Pentafluorphenyl, 3,5-Bis-trifluormethylphenyl, Mesityl, Xylyl oder Tolyl.

Zusätzlich ist häufig eine dritte Komponente erforderlich, um einen Schutz von polaren Katalysator-Giften aufrechtzuerhalten. Hierzu sind aluminiumorganische Verbindung wie z.B. Triethylaluminium, Tributylaluminium und andere sowie Mischungen geeignet.

Je nach Verfahren können auch geträgerte Einzentren-Katalysatoren zur Verwendung kommen. Bevorzugt sind Katalysatorsysteme, bei welchen die Restgehalte von Trägermaterial und Cokatalysator eine Konzentration von 100 ppm im Produkt nicht überschreiten.

Zur Herstellung der erfindungsgemäßen Schmelzklebermassen werden Polyolefin-Metallocenwachse in unveränderter Form eingesetzt.

Die Polyolefinwachse sind im Schmelzkleber enthalten. Weitere Bestandteile sind, als Gerüstsubstanzen, unpolare oder polare Polymere wie z.B. Ethylen-Vinylacetat-Copolymere, ataktische Poly-α-Olefine (APAO), Polyisobutylen, Styrol-Butadien-Styrol-Blockpolymere oder Styrol-Isopren-Styrol-Blockpolymere, für besonders hoch beanspruchte Verklebungen auch Polyamide oder Polyester. Als Harzkomponenten können z.B. Kolophoniumharze und deren Derivate oder Kohlenwasserstoffharze enthalten sein. Die Schmelzklebemassen können zusätzlich Füllstoffe oder Hilfsstoffe wie Weichmacher, Pigmente und Antioxidantien enthalten.

### Beispiele

Das Molmassengewichtsmittel M_{w}, das Molmassenzahlenmittel Mₙ und der resultierende Quotient M_{w}/Mₙ wurden durch Gelpermeationschromatographie bei 135°C in 1,2-Dichlorbenzol ermittelt. Die Schmelzviskositäten wurden nach DIN 53019 mit einem Rotationsviskosimeter, die Tropfpunkte nach DIN 51801/2, die Erweichungspunkte/Ring Kugel nach DIN EN 1427 bestimmt. Die Säurezahlen - im Falle von polar modifizierten Wachsen - wurden nach DIN 53402 bestimmt.

Die Verfahren nach DIN 53402 dienen zur Bestimmung der Säurezahl von Harzen, Ölen, Fetten, Fettsäuren und anderen technischen organischen Stoffen und Stoffgemischen. Die Säurezahl gibt dabei diejenige Menge Kaliumhydroxid in mg an, die unter den festgelegten Bedingungen erforderlich ist um 1 g der zu untersuchenden Probe zu neutralisieren.

### Durchführung:

Die Probe wird auf 0,001 g in das Titriergefäß eingewogen und in 50 ml Lösemittelgemisch gelöst. Die Lösung wird gegebenenfalls auf Raumtemperatur abgekühlt und nach Zugabe von 2 bis 3 Tropfen Phenolphthalein-Lösung mit alkoholischer KOH rasch titriert, bis die auftretende Rotfärbung mindestens 10 s besteht.

Die erfindungsgemäß eingesetzten, in Tabelle 1 aufgeführten Metallocen-Polyolefinwachse wurden nach dem in EP-A-0 571 882 angegebenen Verfahren hergestellt. Sie weisen alle eine gewichtsmittlere Molmasse M_{w} zwischen 1000 und 30000 g/mol und eine zahlenmittlere Molmasse Mn zwischen 500 und 20000 g/mol auf.

**Tabelle 1: Eingesetzte Polyolefinwachse**

| | Produkttyp | Polymerisationskatalysator bzw. Verfahren | Tropfpunkt °C | Säurezahl mg KOH/g | Viskosität mPa.s |
|---|---|---|---|---|---|
| Beispiel 1 | Ethylen-Homopolymerwachs | Metallocen | 125 | - | 60/140°C |
| Beispiel 2 | Ethylen-/Propylen-Copolymerwachs | Metallocen | 116 | - | 680/140°C |
| Beispiel 3 | Propylen-Ethylen-Copolymerwachs | Metallocen | 120 | - | 460/140°C |
| Beispiel 4 | Oxidiertes Ethylen-Propylen-Copolymerwachs* | Metallocen | 105 | 18 | 250/120°C |
| Beispiel 5 | MSA-Pfropfprodukt aus Metallocen-Ethylen-Homopolymer aus Beispiel 1 | - | 121 | 11 | 110/140°C |
| | | | | | |
| Vergleichsbeispiel 1 | Ethylen-Homopolymerwachs | Ziegler | 125 | - | 200/140°C |
| Vergleichsbeispiel 2 | Ethylen-/Propylen-Copolymerwachs | Ziegler | 118 | - | 600/140°C |
| Vergleichsbeispiel 3 | Propylen-Homopolymerwachs | Ziegler | 158 | - | 710/170°C |
| Vergleichsbeispiel 4 | Oxidiertes Ethylen-Propylen-Copolymerwachs** | Ziegler | 108 | 18 | 250/120°C |
| Vergleichsbeispiel 5 | MSA-Pfropfprodukt aus Ziegler-Ethylen-Homopolymerwachs aus Vergleichsbeispiel 1 | - | 122 | 9 | 610/140°C |

| | | | | | |
|---|---|---|---|---|---|
| *Mittels Luft oxidiertes Wachs aus Beispiel 2 **Mittels Luft oxidiertes Wachs aus Vergleich 2 | | | | | |

### Anwendungstechnische Prüfergebnisse

Unter Verwendung der in Tabelle 1 aufgeführten Wachse wurden Schmelzklebermassen hergestellt. Hierzu wurden Mischungen aus

| | |
|---|---|
| 47,5 g | ^{®}Elvax 220 (DuPont) (Schmelzviskosität 230 000 mPa.s/140°C), |
| 47,3 g | ^{®}Resin 835 A (Abieta Chemie GmbH) und |
| 5,0 g | des jeweiligen Prüfwachses sowie |
| 0,4 g | ^{®}Hostanox O 10 (Clariant GmbH) |

in einem Becherglas aufgeschmolzen und eine Stunde bei 180°C gerührt.

Mit den Mischungen wurden gemäss DIN 53281 Aluminiumfolien beschichtet und verklebt. Die Klebkraft wurde entsprechend DIN 53282 (Winkelschälversuch) bestimmt.

Die DIN 53282 legt die Vorbehandlung im Klebflächen von Proben aus Aluminiumlegierungen fest, der für die vergleichende Prüfung von Metallklebstoffen und Metallklebungen verwendet werden.
Die Klebeflächenvorbehandlung umfasst das Reinigen, Entfetten, chemische Behandeln, Spülen und Isolieren der Klebeflächen vor dem Klebstoffauftrag.
Die Klebeflächen müssen mit organischen Lösungsmitteln (Dampfbad oder Tauchbad) oder mit anorganischen Entfettungsmitteln (in einem Kalt-, Warm- oder Elektrolysebad, beispielsweise mit gepufferter alkalischer Lösung) entfettet werden.
Es soll möglichst sofort nach dem Vorbehandeln der Klebflächen geklebt werden. Das Kleben wird in Vorrichtungen durchgeführt, die das Einhalten der vorgeschriebenen Abbindebedingungen (Temperatur, Anpressdruck, Zeit) sicherstellen. Die Temperatur muss in oder an der Klebeschicht gemessen werden. Der Anpressdruck auf die Klebefläche muss gleichmäßig verteilt sein, er kann mechanisch, hydraulisch oder mit Vakuum im Autoklaven aufgebracht werden.

Der Winkelschälversuch nach DIN 53282 dient zum Ermitteln des Widerstands von Metallklebungen gegen abschälende Kräfte. Der Versuch wird vorwiegend zum vergleichenden Beurteilen von Klebstoffen und Klebungen sowie zum Überwachen der Klebflächenvorbehandlungen eingesetzt. Hierzu wird die T-förmige abgewinkelte geklebte Probe an ihren nicht geklebten Schenkeln durch eine Zugkraft mittels einer Zugprüfmaschine so lange beansprucht, bis die Klebschicht reißt und beide Probehälften voneinander getrennt sind. Die dazu erforderliche Kraft wird bei gleichzeitiger Messung der Längenänderung zwischen den Einspannköpfen in einem Schäldiagramm registriert.
Zur Bestimmung der Kälteflexibilität wurden 250 x 10 mm große Prüfkörper hergestellt und über einen Dorn gebogen. Die Temperatur wurde in Schritten von 1 ° beginnend bei 0°C erniedrigt. Als Messgröße diente diejenige Temperatur, bei der der Prüfkörper bricht.

**Tabelle 2: Eigenschaften der Rezepturmischungen/anwendungstechnische Ergebnisse**

| Eingesetztes Wachs | Erweichungspunkt R/K °C | Viskosität bei 180°C mPa.s | Klebkraft N/mm | Kälteflexibilität °C |
|---|---|---|---|---|
| Beispiel 1 | 91 | 1700 | 0,8 | -5 |
| Vergleichsbeispiel 1 | 82 | 3200 | 0,3 | 0 |
| Beispiel 2 | 87 | 3300 | 1,2 | -10 |
| Vergleichsbeispiel 2 | 87 | 3500 | 0,8 | 0 |
| Beispiel 3 | 73 | 3400 | 1,4 | -15 |
| Vergleichsbeispiel 3 | 101 | 5050 | 1,2 | -5 |
| Beispiel 4 | 84 | 2200 | 1,3 | -10 |
| Vergleichsbeispiel 4 | 85 | 2800 | 1,1 | -10 |
| Beispiel 5 | 76 | 4400 | 1,8 | -20 |
| Vergleichsbeispiel 5 | 78 | 5000 | 1,7 | -10 |

Die mit Metallocenwachs hergestellten Rezepturen weisen gegenüber den Vergleichsbeispielen generell höhere Klebkräfte und überwiegend bessere Kälteflexibilitäten auf.

## Patentansprüche

1. Schmelzklebemassen, enthaltend Polyolefinwachse, wobei die Polyolefinwachse mit Hilfe von Metallocenkatalysatoren hergestellt wurden, in unveränderter Form eingesetzt werden und einen Tropf- oder Erweichungspunkt Ring/Kugel zwischen 80 und 165 °C und eine Schmelzviskosität, gemessen bei einer Temperatur von 10 K oberhalb des Tropf- oder Erweichungspunktes, von maximal 40 000 mPa·s aufweisen, und mindestens einen weiteren Bestandteil ausgewählt aus der Gruppe Ethylen-Vinylacetat-Copolymere, ataktische Poly-α-Olefine, Polyisobutylen, Styrol-Butadien-Styrol-Blockpolymere, Styrol-Isopren-Styrol-Blockpolymere, Polyamide, Polyester, Kolophoniumharze und deren Derivate oder Kohlenwasserstoffharze oder eine Kombination von diesen.

2. Schmelzklebemassen nach Anspruch 1, **dadurch gekennzeichnet, dass** die Polyolefinwachse einen Tropf- oder Erweichungspunkt Ring/Kugel zwischen 90 und 160 °C und eine Schmelzviskosität, gemessen bei einer Temperatur von 10 K oberhalb des Tropf- oder Erweichungspunktes, von maximal 30 000 mPa·s aufweisen.

3. Schmelzklebemassen nach Anspruch 1 oder 2, **dadurch gekennzeichnet, dass** die Polyolefinwachse eine gewichtsmittlere Molmasse M_{w} zwischen 1000 und 30 000 g/mol und eine zahlenmittlere Molmasse Mₙ zwischen 500 und 20 000 g/mol aufweisen.

4. Schmelzklebemassen nach einem oder mehreren der Ansprüche 1 bis 3, enthaltend als Polyolefinwachse Copolymerwachse aus Propylen und 0,1 bis 30 Gew.-% Ethylen und/oder 0,1 bis 50 Gew.-% mindestens eines verzweigten oder unverzweigten 1-Alkens mit 4 bis 20 C-Atomen und mit einer Schmelzviskosität, gemessen bei einer Temperatur von 10 K oberhalb des Tropf- bzw. Erweichungspunktes, zwischen 100 und 30 000 mPa·s.

5. Schmelzklebemassen nach einem oder mehreren der Ansprüche 1 bis 3, enthaltend als Polyolefinwachse Propylenhomopolymerwachse mit einer Schmelzviskosität, gemessen bei einer Temperatur von 10 K oberhalb des Tropf- bzw. Erweichungspunktes, zwischen 100 und 30 000 mPa·s.

6. Schmelzklebemassen nach einem oder mehreren der Ansprüche 1 bis 3, enthaltend als Polyolefinwachse Ethylenhomopolymerwachse.

7. Schmelzklebemassen nach einem oder mehreren der Ansprüche 1 bis 3, enthaltend als Polyolefinwachse Copolymerwachse aus Ethylen und 0,1 bis 30 Gew.-% mindestens eines verzweigten oder unverzweigten 1-Alkens mit 3 bis 20 C-Atomen.

8. Schmelzklebemassen nach einem oder mehreren der Ansprüche 1 bis 7, **dadurch gekennzeichnet, dass** sie weiterhin Füllstoffe oder Hilfsstoffe wie Weichmacher, Pigmente und Antioxidantien enthalten.

## Claims

1. A hotmelt adhesive comprising polyolefin waxes, the polyolefin waxes having been prepared using metallocene catalysts, being used in unchanged form and having a dropping point or ring & ball softening point of between 80 and 165°C and a melt viscosity, measured at a temperature of 10 K above the dropping or softening point, of not more than 40 000 mPa.s, and at least one further constituent selected from the group of ethylene-vinyl acetate copolymers, atactic poly-α-olefins, polyisobutylene, styrene-butadiene-styrene block polymers, styrene-isoprene-styrene block polymers, polyamides, polyesters, rosins and their derivatives or hydrocarbon resins or a combination of these.

2. A hotmelt adhesive as claimed in claim 1 wherein the polyolefin waxes have a dropping point or ring & ball softening point of between 90 and 160°C and a melt viscosity, measured at a temperature of 10 K above the dropping or softening point, of not more than 30 000 mPa.s.

3. A hotmelt adhesive as claimed in claim 1 or 2, wherein the polyolefin waxes have a weight-average molar mass M_{w} of between 1000 and 30 000 g/mol and a number-average molar mass Mₙ of between 500 and 20 000 g/mol.

4. A hotmelt adhesive as claimed in one or more of claims 1 to 3, comprising as polyolefin waxes copolymer waxes of propylene and from 0.1 to 30% by weight of ethylene and/or from 0.1 to 50% by weight of at least one branched or unbranched 1-alkene having 4 to 20 carbon atoms, and having a melt viscosity, measured at a temperature of 10 K above the dropping or softening point, of between 100 and 30 000 mPa.s.

5. A hotmelt adhesive as claimed in one or more of claims 1 to 3, comprising as polyolefin waxes propylene homopolymer waxes having a melt viscosity, measured at a temperature of 10 K above the dropping or softening point, of between 100 and 30 000 mPa.s.

6. A hotmelt adhesive as claimed in one or more of claims 1 to 3, comprising as polyolefin waxes ethylene homopolymer waxes.

7. A hotmelt adhesive as claimed in one or more of claims 1 to 3, comprising as polyolefin waxes copolymer waxes of ethylene and from 0.1 to 30% by weight of at least one branched or unbranched 1-alkene having 3 to 20 carbon atoms.

8. A hotmelt adhesive as claimed in one or more of claims 1, to 7, further comprising fillers or auxiliaries such as plasticizers, pigments and antioxidants.

## Revendications

1. Composition adhésive fusible, contenant des cires de polyoléfines, dans laquelle on prépare les cires de polyoléfines à l'aide de catalyseurs métallocène, celles-ci sont utilisées sous forme non modifiée et présentent un point de goutte ou de ramollissement anneau/bille entre 80 et 165 °C et une viscosité de matière fondue, mesurée à une température de 10 K au-dessus du point de goutte ou de ramollissement, au maximum de 40 000 mPa·s, et au moins un autre constituant choisi dans le groupe des copolymères éthylène-acétate de vinyle, des poly-α-oléfines atactiques, du polyisobutylène, des polymères séquencés styrène-butadiène-styrène, des polymères séquencés styrène-isoprène-styrène, des polyamides, des polyesters, des résines de colophane et de leurs dérivés ou des résines hydrocarbonées ou d'une combinaison de ceux-ci.

2. Composition adhésive fusible selon la revendication 1, **caractérisée en ce que** les cires de polyoléfine présentent un point de goutte ou de ramollissement anneau/bille entre 90 et 160 °C et une viscosité de matière fondue, mesurée à une température de 10 K au-dessus du point de goutte ou de ramollissement, au maximum de 30 000 mPa·s.

3. Composition adhésive fusible selon la revendication 1 ou 2, **caractérisée en ce que** les cires de polyoléfine présentent une masse molaire moyenne en masse M_{w} entre 1 000 et 30 000 g/mol et une masse molaire moyenne en nombre Mₙ entre 500 et 20 000 g/mol.

4. Composition adhésive fusible selon une ou plusieurs des revendications 1 à 3, contenant comme cires de polyoléfine des cires de copolymères de propylène et 0,1 à 30 % en poids d'éthylène et/ou 0,1 à 50 % en poids d'au moins un 1-alcène ramifié ou non ramifié avec 4 à 20 atomes de carbone et ayant une viscosité de matière fondue, mesurée à une température de 10 K au-dessus du point de goutte ou de ramollissement, entre 100 et 30 000 mPa·s.

5. Composition adhésive fusible selon une ou plusieurs des revendications 1 à 3, contenant comme cires de polyoléfine des cires d'homopolymère de propylène avec une viscosité de matière fondue, mesurée à une température de 10 K au-dessus du point de goutte ou de ramollissement, entre 100 et 30 000 mPa·s.

6. Composition adhésive fusible selon une ou plusieurs des revendications 1 à 3, contenant comme cires de polyoléfine des cires d'homopolymère d'éthylène.

7. Composition adhésive fusible selon une ou plusieurs des revendications 1 à 3, contenant comme cires de polyoléfine des cires de copolymère d'éthylène et de 0,1 à 30 % en poids d'au moins un 1-alcène ramifié ou non ramifié avec 3 à 20 atomes de carbone.

8. Composition adhésive fusible selon une ou plusieurs des revendications 1 à 7, **caractérisée en ce qu'**elle contient en outre des charges ou des adjuvants comme des assouplissants, des pigments et des antioxydants.
